# EUROPEAN PATENT SPECIFICATION

(11) **EP 4 483 005 B1**
(45) Date of publication and mention of the grant of the patent: **21.10.2026**
(21) Application number: 22743552.6
(22) Date of filing: 27.05.2022
(51) Int. Cl.: D01F 6/70, D01F 1/10

(54) **POLYURETHANE ELASTIC FIBER**
POLYURETHAN-ELASTISCHE FASER
FIBRE ÉLASTIQUE EN POLYURÉTHANE

(30) Priority: 25.02.2022 JP 2022027753
(43) Date of publication of application: 01.01.2025
(73) Proprietor: Toray Opelontex Co., Ltd, Osaka 530-8222 (JP)
(72) Inventor: TANAKA, Toshihiro, Otsushi, Shiga 520-8558 (JP); NAESHIRO, Kazuki, Otsushi, Shiga 520-8558 (JP)
(74) Representative: Carpmaels & Ransford LLP
(86) International application number: PCT/IB2022/055004
(87) International publication number: WO 2023/161692

(56) References cited:
- WO-A1-2006/006784
- WO-A1-2021/060292
- JP-A- S56 107 010
- US-A- 5 969 028
- US-A1- 2011 092 628

## Description

### [Technical Field]

The present invention relates to a polyurethane elastic fiber and, more specifically, to a polyurethane elastic fiber using a recycled polyurethane elastic fiber as at least one raw material.

### [Background Art]

In recent years, contributions to the Sustainable Development Goals (SDGs) have been pursued, and the use of recycled resources is the most important challenge for all industrial products. For example, there is a technique for polyurethane elastic fibers in which fiber waste produced in the manufacturing process and necessary fibers from used products are collected and recycled, and there is an older technique going back some years of melting down and recycling fiber waste, as disclosed in Patent Document 1 and Patent Document 2. Another technique has been discovered in recent years, as disclosed in Patent Document 3 and Patent Document 4, in which a cascade-type recycled fiber is produced by breaking down a polyurethane raw material and then dissolving it using a solvent. Patent Document 5 discloses a polyurethane elastic fiber comprising a soap in an amount of 0.003 to 3 wt%.

However, in the horizontal recycling of polyurethane elastic fibers into polyurethane elastic fibers, a problem occurs that is unique to polyurethane elastic fibers. Here, the properties of the polyurethane elastic fibers that are produced deteriorate due to substances that build up and diminish during recycling. This problem is especially significant when polyurethane elastic fibers are repeatedly recycled and both the amount of recycled polyurethane and the number of times it has been recycled are high.

### [Citation List]

### [Patent Literature]

[Document Name 1] JP S56-122836 A
[Document Name 2] JP S57-042657 A
[Document Name 3] CN 101096781 A
[Document Name 4] JP 2002-538314 A
[Document Name 5] JP S56-107010 A

### [Summary of Invention]

### [Technical Problem]

It is an object of the present invention to provide a polyurethane elastic fiber containing recycled polyurethane that can suppress the deterioration in certain properties due to recycling.

### [Solution to Problem]

As mentioned above, the polyurethane elastic fibers containing recycled polyurethane deteriorate due to substances that build up and diminish during recycling. A major factor in the buildup of certain substances is the finely pulverized metal soap present in polyurethane elastic fiber oils. Typical examples of metal soaps are magnesium stearate and calcium stearate. Oil agents suppress the sticking phenomenon that occurs in wound polyurethane elastic fibers, and can reduce the friction that occurs during unwinding of fibers and the friction that occurs between fibers and guides, rollers, and knitting needles in the knitting process. However, they also have an adverse effect on the shape of wound polyurethane elastic fiber. This effect is more pronounced when an oil agent is added to fibers than when applied to the outside, and may occur as a difference of ten times or more in the unwinding tension per unit of mass. When an oil agent is added to fibers, the metal soap is dissolved or melted to evenly coat the fiber surface in the form of a molecular film. This significantly reduces the unwinding tension, but changes the shape of the wound fiber. So-called spool collapse causes a deterioration in properties that lowers the upper limit of the amount that can be wound.

The second type of built-up substance having an adverse effect is decomposition products. Examples of decomposition products include decomposition products of hindered phenols included in antioxidants and decomposition products of tertiary amine compounds used in dyeing agents. Other examples of built-up substances having an adverse effect include the crosslinked structure modifiers unique to polyurethane ureas. Deterioration in properties caused by these decomposition products include discoloration, changes in color over time, and deterioration in mechanical properties. Deterioration in properties is especially significant when polyurethane elastic fibers are repeatedly recycled and the amount of recycled polyurethane is high.

The present inventors discovered that these problems could be solved in polyurethane elastic fiber containing recycled polyurethane that experience deterioration in these properties by keeping the amount of metal soap in oil agents and the amounts of specific substances such as surfactants, amines, acids, and catalysts within specific ranges that enable the deterioration in properties to be suppressed, and by selecting raw materials to be recycled using a specific method with respect to decomposition products. The present inventors also discovered that polyurethane elastic fibers containing recycled polyurethane with improved properties could be obtained that also enable horizontal recycling of polyurethane elastic fibers.

The present invention is disclosed in the appended claims.

### [Effect of Invention]

The present invention is able to provide a polyurethane elastic fiber in which property suppression has been adequately suppressed despite being a polyurethane elastic fiber containing recycled polyurethane.

### [Brief Description of Drawings]

[Fig. 1]

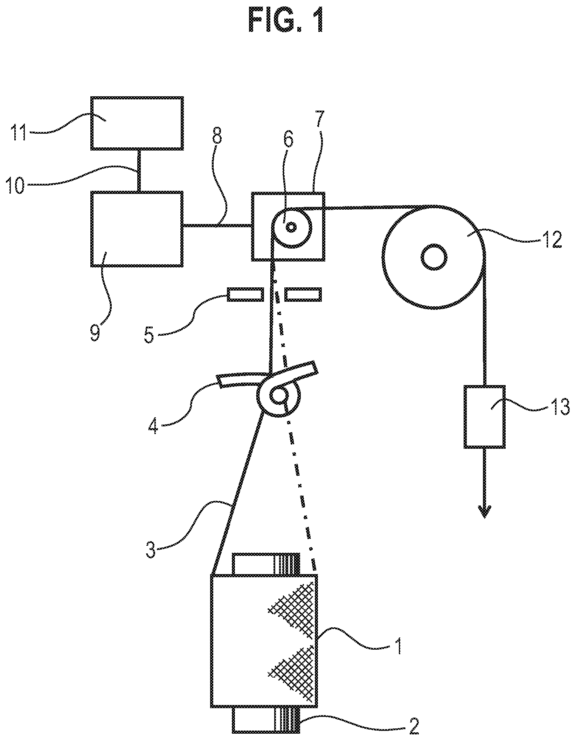

   Fig. 1 is a configuration diagram of the unwinding tension measuring device used to embody the unwinding tension measuring methods in the examples and the comparative examples.
[Fig. 2]

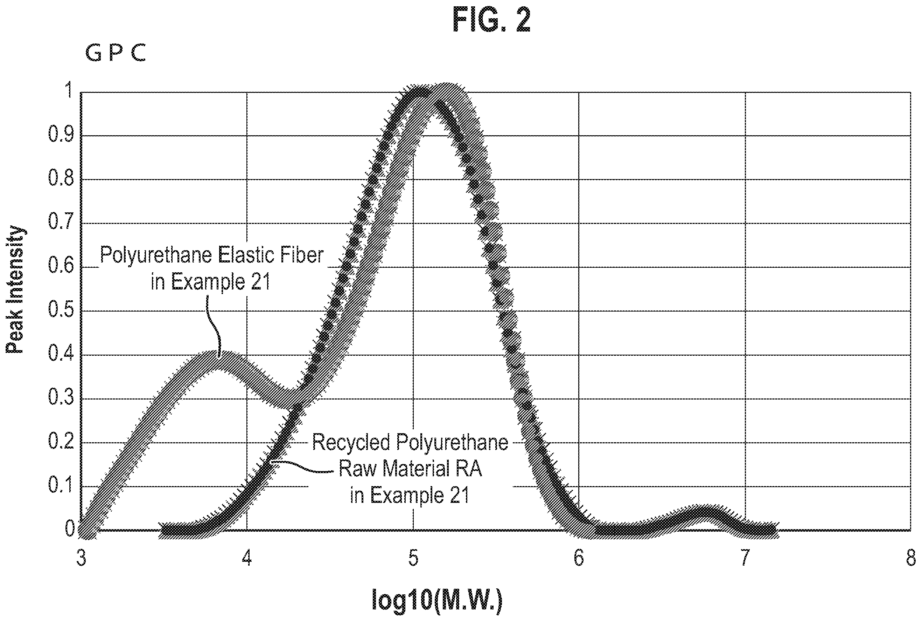

   Fig. 2 is a graph showing GPC measurements of Example 21.
[Fig. 3]

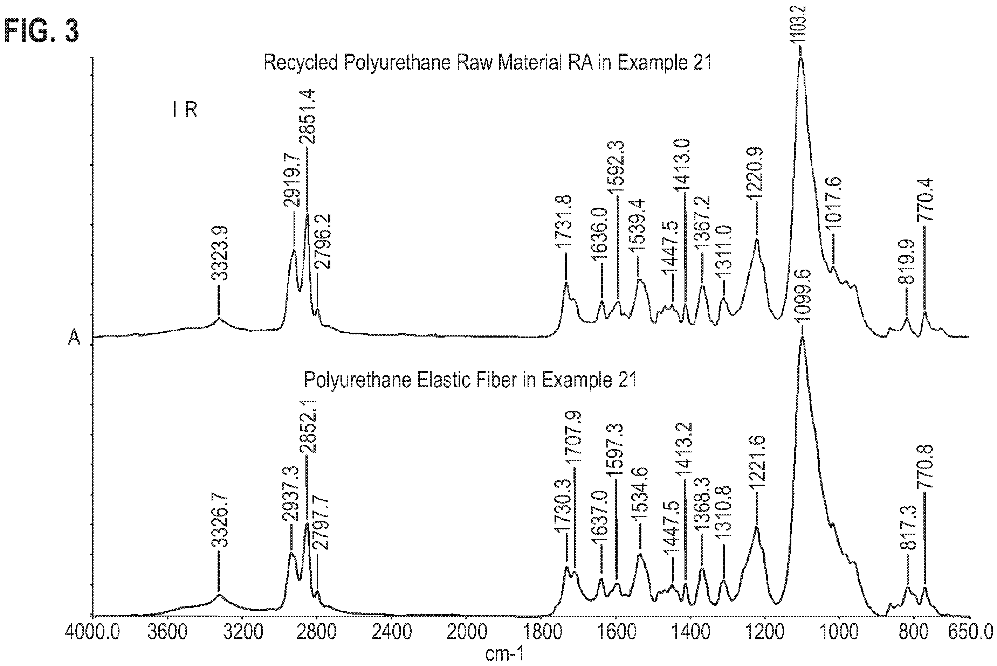

   Fig. 3 is a graph showing IR spectrum measurements of Example 21.

### [Description of Embodiments]

The present invention will now be described in detail with reference to embodiments. First, the polyurethane used as the main component of a polyurethane elastic fiber of the present invention will be described. Here, the main component of a polyurethane elastic fiber is a compound used in an amount exceeding 50% by mass.

Any polyurethane may be used in the present invention as long as it has a structure that uses a polymer diol and diisocyanate as starting materials. There are no particular restrictions. In addition, there are no particular restrictions on the method of synthesis that is used. For example, the polyurethane may be a polyurethane urea composed of a polymer diol, a diisocyanate, and a low molecular weight diamine serving as a chain extender, or may be a polyurethane urethane composed of a polymer diol, a diisocyanate, and a low molecular weight diol serving as a chain extender. A polyurethane urea using a compound that has a hydroxyl group and an amino group in the molecule as a chain extender may also be used. Polyfunctional glycols and isocyanates with at least trifunctionality can also be used as long as they do not impair the effects of the present invention. There are no particular restrictions on the processing method used to obtain these. For example, polyurethane obtained by recycling and respinning fibers may also be used.

The polymer diol is preferably a polyether-based diol, a polyester-based diol, or a polycarbonate diol. However, use of a polyether-based diol is preferred from the standpoint of imparting flexibility and elasticity to the fiber.

Preferred examples of polyether-based diols that can be used include polyethylene oxide, polyethylene glycol, polyethylene glycol derivatives, polypropylene glycol, polytetramethylene ether glycol (PTMG), modified PTMG that is a copolymer of tetrahydrofuran (THF) and 3-methyltetrahydrofuran, modified PTMG that is a copolymer of THF and 2-methyltetrahydrofuran, modified PTMG that is a copolymer of THF and 2,3-dimethyl THF, polyols that have side chains on both ends as disclosed, for example, in JP 2615131 B2, and random copolymers with an irregular arrangement of THF and ethylene oxide and/or propylene oxide. These polyether-based diols may be used alone or in mixtures or copolymers of two or more.

From the standpoint of wear resistance and light fastness, preferred examples of polyurethane elastic fibers that can be used include butylene adipate, polycaprolactone diol, polyester-based diols such as polyester polyols that have side chains as disclosed in JP S61-026612 A, and polycarbonate diols as disclosed in JP H02-289516 A.

These polymer diols may be used alone or in mixtures or copolymers of two or more.

From the standpoint of the elasticity, strength, and heat resistance of the resulting elastic fiber, the molecular weight of the polymer diol is preferably 1,000 or more and 8,000 or less, and more preferably 1,500 or more and 6,000 or less. By using a polyol with a molecular weight in this range, an elastic fiber with excellent elasticity, strength, elastic restoring force, and heat resistance can be easily obtained.

Use of an aromatic diisocyanate such as diphenylmethane diisocyanate (MDI), tolylene diisocyanate, 1,4-diisocyanate benzene, xylylene diisocyanate, or 2,6-naphthalene diisocyanate as the diisocyanate is particularly suitable for synthesizing polyurethanes with high heat resistance and strength. Preferred examples of alicyclic diisocyanates include methylenebis (cyclohexyl isocyanate), isophorone diisocyanate, methylcyclohexane 2,4-diisocyanate, methylcyclohexane 2,6-diisocyanate, cyclohexane 1,4-diisocyanate, hexahydroxylylene diisocyanate, hexahydrotoluene diisocyanate, and octahydro 1,5-naphthalene diisocyanate. An alicyclic diisocyanate is particularly effectively at suppressing yellowing of polyurethane elastic fibers. These diisocyanates may be used alone or in combinations of two or more.

The chain extender used to synthesize the polyurethane is preferably at least one type of low molecular weight diamine or a low molecular weight diol. Note that the compound may have both a hydroxyl group and an amino group in one molecule such as an ethanolamine.

Preferred examples of low molecular weight diamines include ethylenediamine, 1,2-propanediamine, 1,3-propanediamine, hexamethylenediamine, p-phenylenediamine, p-xylylenediamine, m-xylylenediamine, p,p'-methylenedianiline, 1,3-cyclohexyldiamine, hexahydromethphenylenediamine, 2-methylpentamethylenediamine, and bis (4-aminophenyl) phosphine oxide. These may be used alone or in combinations of two or more. Ethylenediamine is especially preferred. Use of ethylenediamine makes it possible to easily obtain a yarn having excellent elasticity, elasticity recovery, and heat resistance. A triamine compound that is capable of forming a crosslinked structure, such as diethylenetriamine, may be added to the chain extenders as long as it does not impair the effects of the present invention.

Representative examples of low molecular weight diols include ethylene glycol, 1,3-propanediol, 1,4-butanediol, bishydroxyethoxybenzene, bishydroxyethylene terephthalate, and 1-methyl-1,2-ethanediol. These may be used alone or in combinations of two or more. Ethylene glycol, 1,3-propanediol, and 1,4-butanediol are especially preferred. When these are used, a fiber with higher heat resistance and higher strength for a diol-extended polyurethane can be obtained.

The molecular weight of the polyurethane in the present invention is preferably in the range of 30,000 or more and 150,000 or less in terms of the number average molecular weight from the standpoint of obtaining polyurethane elastic fibers having high durability and strength. The molecular weight is measured by GPC in terms of polystyrene.

Preferably, one or more end-capping agents is used for the polyurethane. Preferred examples of end-capping agents include monoamines such as dimethylamine, diisopropylamine, ethylmethylamine, diethylamine, methylpropylamine, isopropyl methylamine, diisopropylamine, butylmethylamine, isobutyl methylamine, isopentylmethylamine, dibutylamine and diamylamine, monools such as ethanol, propanol, butanol, isopropanol, allyl alcohol and cyclopentanol, and monoisocyanates such as phenyl isocyanate.

In the present invention, a polyurethane elastic fiber made of a polyurethane with the basic configuration described above is constituted as a polyurethane elastic fiber using recycled polyurethane elastic fiber as at least one raw material. Here, a recycled polyurethane elastic fiber is a polyurethane elastic fiber that was manufactured as a polyurethane elastic fiber at least once before as a product and then recovered. It may be recovered in the form of waste fibers, in the form of a fabric, or in the form of a repeatedly recycled product. There are no particular restrictions on the method of recovery, and recycled polyurethane elastic fibers may be recovered by any means.

A first characteristic of a polyurethane elastic fiber using a recycled polyurethane elastic fiber as at least one raw material in the present invention is keeping the metal soap content within the range of 0.003% by mass or more and 3.0% by mass or less. When the metal soap content is 0.003% by mass or less, there is a chance that the polyurethane elastic fiber will not unwind. When the content is greater than 3.0% by mass, the tension is not stable when the polyurethane elastic fiber is unwound and there is a chance that it will not unwind. By keeping the metal soap content within the range of 0.003% by mass or more and 3.0% by mass or less, the preferred practical properties for the polyurethane elastic fiber, such as the preferred wound fiber shape, unwinding tension, and elongation and strength at break, are ensured. The metal soap content of a polyurethane elastic fiber of the present invention is preferably 0.03% by mass or more and 2.5% by mass or less, and more preferably 0.3% by mass or more and 2.0% by mass or less.

In order to keep the metal soap content in the desired range mentioned above (0.003% by mass or more and 3.0% by mass or less), the metal soap content of the recycled polyurethane elastic fiber used as a raw material may be determined, and the mixing ratio of recycled polyurethane elastic fiber to virgin polyurethane raw material is adjusted to a ratio that can obtain the desired metal soap content.

The metal soap content of the recycled polyurethane elastic fiber used as a raw material is preferably in the range of 0.02% by mass or more and 1.0% by mass or less. When the metal soap content of the recycled polyurethane elastic fiber is within this range, the metal soap content in the final polyurethane elastic fiber can be easily kept within the desired metal soap content range described above. The metal soap content of the recycled polyurethane elastic fiber is more preferably 0.03% by mass or more and 0.5% by mass or less, and even more preferably 0.05% by mass or more and 0.3% by mass or less.

Specific examples of metal soaps include magnesium stearate, calcium stearate, and lithium stearate.

When the polyurethane elastic fiber of the present invention contains a surfactant, the amount is preferably 0.003% by mass or more and 3.0% by mass or less. Surfactants can reduce the effect of metal soaps that build up during recycling, and surfactants have moderate sustained release properties while polyurethane elastic fibers are in use, so surfactant build up is modest. When the surfactant content is within this range, preferable practical properties for the polyurethane elastic fiber, such as preferable unwinding properties (unwinding tension), wound fiber shape, and elongation and strength at break, are ensured. The surfactant content is more preferably in the range of 0.03% by mass or more and 2.5% by mass or less, and even more preferably in the range of 0.3% by mass or more and 2.0% by mass or less.

The amount of surfactant in recycled polyurethane elastic fiber that is recovered and reused as a raw material is preferably in the range of 0.003% by mass or more and 0.5% by mass or less. When the surfactant content of the recycled polyurethane elastic fiber is within this range, the surfactant content in the final polyurethane elastic fiber can be easily kept within the desired surfactant content range described above. The surfactant content of the recycled polyurethane elastic fiber is more preferably 0.03% by mass or more and 0.25% by mass or less, and even more preferably 0.05% by mass or more and 0.2% by mass or less.

Specific examples of surfactants that can be used include nonionic surfactants, anionic surfactants, and cationic surfactants. Nonionic surfactants that can be used in the present invention include polyoxyethylene alkyl ethers, alkyl monoglyceryl ethers, polyoxyethylene alkyl amines, fatty acid sorbitan esters, and fatty acid diethanolamides. Among these, the hydrophilic portion (hydrophil) of the surfactant is preferably an ether type. For example, use of at least one of an ethylene oxide polymer, a propylene oxide polymer, and a copolymer of ethylene oxide and propylene oxide is preferred. By using at least one end-modified derivative of an ethylene oxide polymer, end-modified derivative of a propylene oxide polymer, and end-modified derivative of a copolymer of ethylene oxide and propylene oxide as a nonionic surfactant, antibacterial properties can be improved while increasing spinnability. The hydrophobic portion (hydrophob) of the surfactant has the end-modified structure described above, but an alkyl group, a phenyl group, and a styrenated phenyl group are preferred. Specific examples of nonionic surfactants include polyoxyethylene stearyl ether, polyoxyethylene lauryl ether, polyoxyethylene ethylphenol ether, polyoxyethylene propyl phenol ether, polyoxyethylene styrenated phenyl ether, and polyoxyethylene sorbitol tetraoleate. Even more preferred are polyoxyethylene styrenated phenyl ethers, such as olyoxyethylene oxypropylene trisstyrene phenyl ether, polyoxyethylene oxypropylene distyrene phenyl ether, polyoxyethylene oxypropylene monostyrene phenyl ether, polyoxyethyleneoxypropylene-2,4,6-tris (a,a-dimethylbenzyl) phenyl ether, polyoxyethyleneoxypropylene-2,4-bis (a,a-dimethylbenzyl) phenyl ether, polyoxyethylene oxypropylene-2-mono (a,a-dimethylbenzyl) phenyl ether, and polyoxyethylene oxypropylene-4-mono (a,a-dimethylbenzyl) phenyl ether. Even more preferred are mixtures of these in which the number of added moles of these styrene groups has a good distribution.

In the present invention, when used in combination with a quaternary ammonium salt that is a cationic surfactant, the antibacterial activity differs depending on the chain length of the alkyl group in the ammonium ion. A combination with strong antibacterial activity is desired, but from the standpoint of suppressing thermal decomposition due to heat in the production of polyurethane elastic fibers, selection of a chain type such as an alkyl group with a long chain length, such as an alkyl group having a large number of carbon atoms, is preferred. Used of an antibacterial agent is preferred from the standpoint of hygiene when, for example, used clothes have been recycled. Preferred ammonium ions from this standpoint are didecyldimethylammonium ions and oleyltrimethylammonium ions. These are usually supplied using inorganic salts such as chlorides, bromides, and iodides, and organic acid salts such as sulfonates, carboxylates, and phosphates. Among these, sulfonates and carboxylates are preferred from the standpoint of stability against yellowing and heat resistance.

Specific examples of salts with this structure include didecyldimethylammonium-3-fluoromethylsulfonate, didecyldimethylammonium trifluoromethanesulfonate, didecyldimethylammonium pentafluoroethanesulfonate, n-hexadecyltrimethylammonium trifluoromethanesulfonate, and benzyldimethyl palm oil alkylammonium pentafluoroethanesulfonate.

From the standpoint of exhibiting antibacterial properties and maintaining a balance between yellowing and elongation characteristics, a quaternary ammonium salt-based antibacterial agent is preferably used within a range of 0.1% by mass or more and 5% by mass or less relative to the overall mass of the polyurethane elastic fiber.

When a polyurethane elastic fiber of the present invention contains an antioxidant, the amount is preferably 0.002% by mass or more and 5.0% by mass or less. When the amount of antioxidant is within this range, antioxidants with preferred practical properties for polyurethane elastic fibers include hindered phenolic compounds, and phenol compounds generally known as antioxidants. Examples include 3,5-di-t-butyl-4-hydroxy-toluene, n-octadecyl-(3-(4'-hydroxy-3',5'-di-t-butylphenyl) propionate, tetrakis [methylene-3-(3',5'-dit-butyl-4'-hydroxyphenyl) propionate] methane, 1,3,5-trimethyl-2,4,6'-tris (3,5-di-t-butyl-4)-hydroxybenzyl) benzene, calcium (3,5-di-t-butyl-4-hydroxy-benzyl-monoethyl-phosphate), triethylene glycol-bis [3- (3-t-butyl-5-methyl-4-hydroxyphenyl) propionate], 3,9-bis [1,1-dimethyl-2-{(3-(3-t-butyl-4-hydroxy-5-methylphenyl) propionyloxy} ethyl] 2,4,8,10-tetraoxaspiro [5,5] undecane, tocopherol, 2,2'-ethylidene bis (4,6-di-t-butylphenol), N,N'-bis [3-(3,5-di-t-butyl-4-hydroxyphenyl) propionyl] hydrazine, 2,2'-oxamidebis [ethyl-3-(3,5-di-t-butyl-4-hydroxyphenyl) propionate], 1,1,3-tris (2-methyl-4-hydroxy-5-t-butylphenyl) butane, ethylene-1,2-bis (3,3-bis [3-t-butyl-4-hydroxyphenyl] butylate), ethylene-1,2-bis (3-[3-t-butyl-4-hydroxyphenyl] butylate), 1,1-bis (2-methyl-5-t-butyl-4-hydroxyphenyl) butane, 1,1,3-tris (2-methyl-5-t-butyl-4-hydroxyphenyl) butane, 1,3,5-tris (3', 5'-di-t-butyl-4'-hydroxybenzyl)-S-triazine-2,4,6 (1H, 3H, 5H)-trione, 1,3,5-tris (3'-t-butyl-4'-hydroxy-5-methylbenzyl)-S-triazine-2,4,6 (1H, 3H, 5H)-trione, and 1,3,5-tris (4-t-butyl-3-hydroxy-2,6-dimethylbenzyl)-1,3,5-triazine-2,4,6 (1H, 3H, 5H)-trione. Any high molecular weight hindered phenol compound known as an antioxidant for polyurethane elastic fibers is also preferred.

Preferred examples of high molecular weight hindered phenol compounds that can be used include adducts of divinylbenzene and cresol, adducts of dicyclopentadiene and cresol, isobutylene adducts, and polymers of chloromethylstyrene with compounds such as cresol, ethylphenol, and t-butylphenol. Here, divinylbenzene and chloromethylstyrene may be p- or m- versions. Also, the cresol, ethylphenol and t-butylphenol may be o-, m- or p- versions.

Among these, compounds having a molecular weight of 300 or more are preferred from the standpoint of stabilizing the viscosity of the raw material spinning solution for the polyurethane fiber, suppressing volatilization loss during the spinning process, and obtaining good spinnability. Furthermore, in order to exhibit high spinning speeds, heat resistance during the dyeing process, resistance to unsaturated fatty acids, and resistance to heavy metals more effectively, use of 1,3,5-tris (4-t-butyl-3-hydroxy-2,6-dimethylbenzyl)-1,3,5-triazine-2,4,6 (1H, 3H, 5H)-trione, triethylene glycol-bis [3-(3-t-butyl-5-methyl-4-hydroxyphenyl) propionate], ethylene-1,2-bis (3,3-bis [3-t-butyl-4-hydroxyphenyl) propionate] ] butylate), adducts of divinylbenzene and p-cresol, any polymer having from 6 to 12 repeating units, or combinations thereof is preferred. Among these, 1,3,5-tris (4-t-butyl-3-hydroxy-2,6-dimethylbenzyl)-1,3,5-triazine-2,4,6 (1H, 3H, 5H)-trione is especially preferred. When a triazine compound is selected for compound (a) and compound (c), an especially high synergistic effect can be obtained in terms of heat resistance during the dyeing process. Among these, 1,3,5-tris (4-t-butyl-3-hydroxy-2,6-dimethylbenzyl)-1,3,5-triazine-2,4,6 (1H, 3H, 5H)-trione is especially preferred for compound (a), and 2,4-di (2',4'-dimethylphenyl)-6-(2"-hydroxy-4"-alkoxyphenyl)-1,3,5-triazine is especially preferred for compound (c).

Also, a polyurethane elastic fiber of the present invention preferably contains a one-sided hindered phenol compound from the standpoint of suppressing property deterioration due to recycling, especially elongation and strength at break and yellowing. The one-sided phenol compound is preferably a compound containing at least two hydroxyphenyl groups with one being hindered and having a skeleton selected from bis-esters and alkylidenes. Preferably, the alkyl group present at the ring position adjacent to the hydroxyl group in the hydroxyphenyl group is a tertiary butyl group, and preferably the hydroxyl equivalent weight is 600 or less.

The phenol compound in the present invention is preferably a one-sided hindered phenol compound. A preferred example of a one-sided hindered phenol compound is ethylene-1,2-bis (3,3-bis [3-t-butyl-4-hydroxyphenyl] butyrate) with a structure in which the one-sided hindered hydroxyphenyl group is covalently bonded to a bis-ester skeleton (see Chemical Formula 1 below).

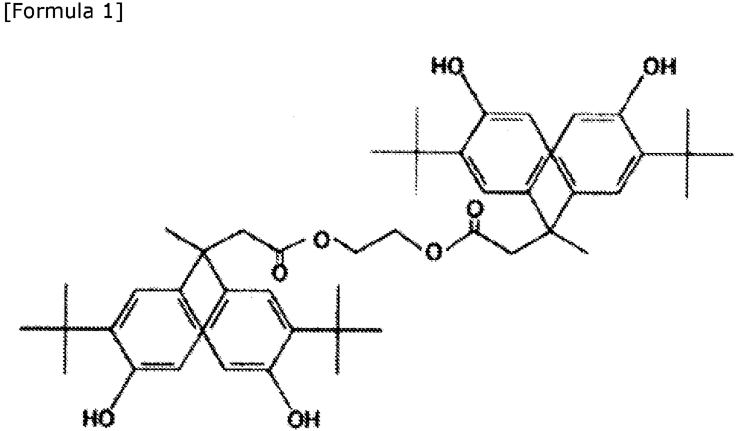

When a one-sided hindered phenol compound described above is used, property deterioration due to recycling can be more effectively suppressed. If washing and bleaching are performed frequently, such as in the case of underwear, this type of hindered phenol compound effectively suppresses the decrease in the molecular weight of polyurethane constituting the polyurethane elastic fiber. From the standpoint of satisfactorily realizing this effect without adversely affecting the physical properties of the fiber, the one-sided hindered phenol compound is preferably used in an amount of 0.15 to 4% by mass relative to the mass the polyurethane elastic fiber. It is more preferably used in an amount of 0.5 to 3.5% by mass to reliably ensure properties such as elongation and strength at break, composite durability, yellowing resistance, and in some cases light fastness. The amount of antioxidant is more preferably in the range of 0.2% by mass or more and 3.0% by mass or less, and even more preferably in the range of 0.5% by mass or more and 2.0% by mass or less.

The amount of antioxidant in the recycled polyurethane elastic fiber recovered and used as a raw material is preferably in the range of 0.1% by mass or more and 5.0% by mass or less. When the amount of antioxidant in the recycled polyurethane elastic fiber is within this range, the antioxidant content in the final polyurethane elastic fiber can be easily kept within the desired antioxidant range described above. The amount of antioxidant in the recycled polyurethane elastic fiber is more preferably 0.2% by mass or more and 3.0% by mass or less, and even more preferably 0.5% by mass or more and 2.0% by mass or less.

More specifically, the antioxidant is a hindered phenol compound having a molecular weight of 1,000 or more. Preferably, a hindered phenol compound having a molecular weight of 1,000 or more known for use as an antioxidant in polyurethane elastic fibers is preferred. There are no particular restrictions other than a relatively high molecular weight of 1,000 or more. Preferred examples of hindered phenol compounds with such a high molecular weight include adducts of divinylbenzene and cresol, adducts of dicyclopentadiene and cresol, isobutylene adducts, and polymers of chloromethylstyrene with a compound such as cresol, ethylphenol, and t-butylphenol. Here, divinylbenzene and chloromethylstyrene may be p- or m- versions. Also, the cresol, ethylphenol and t-butylphenol may be o-, m- or p- versions.

Among these, a hindered phenol compound of a polymer derived from cresol is preferred from the standpoint of stabilizing the viscosity of the raw material spinning solution for the polyurethane fiber and obtaining good spinnability. Furthermore, in order to exhibit high spinning speeds, heat resistance during the dyeing process, resistance to unsaturated fatty acids, and resistance to heavy metals more effectively, use of a certain amount of the high molecular weight hindered phenol compound is preferred. However, from the standpoint of obtaining better basic physical properties for the polyurethane fiber, the amount used is preferably not excessive.

In a polyurethane elastic fiber of the present invention, the amount of the decomposition products from the antioxidant is preferably 1.0% by mass or less. When the amount of the decomposition products from the antioxidant is within this range, preferable practical properties for polyurethane elastic fibers can be ensured, especially elongation and strength at break, yellowing resistance, and durability. The amount of the decomposition products from the antioxidant is preferably 1.0% by mass or less, and more preferably 0.5% by mass or less.

When a polyurethane elastic fiber of the present invention contains a tertiary amine compound, the amount is preferably 0.2% by mass or more and 5.0% by mass or less. When the amount of tertiary amine compound is within this range, preferable practical properties for polyurethane elastic fibers can be improved, such as spinnability, dyeability, durability, and yellowing resistance.

There are no particular restrictions on the tertiary amine compound used in the present invention as long as it has an amino group in its structure. Among primary to tertiary amino groups, those having only tertiary amino groups in the molecule are preferred from the standpoint of chlorine and yellowing resistance of the polyurethane elastic yarn.

When the number average molecular weight of the tertiary amine compound is less than 2,000, water repellency deteriorates due to loss from abrasion with guides and knitting needles during knitting with the polyurethane elastic fiber and bath outflow during the dyeing process. Therefore, the number average molecular weight has to be 2,000 or higher. Taking solubility in the polyurethane spinning stock solution into consideration, the number average molecular weight is preferably in the range of 2,000 to 10,000, and more preferably in the range of 2,000 to 4,000.

When a tertiary amine compound described above is included, the recycling performance of the polyurethane elastic fiber, especially anti-yellowing performance, can be improved. From the standpoint of a satisfactory effect and no adverse effect on the physical properties of the fiber, the amount of tertiary amine compound is preferably 0.2% by mass or more and 5.0% by mass or less, and more preferably 0.5% by mass or more and 4.0% by mass or less, relative to the mass of the fiber. The amount of tertiary amine compound is more preferably in the range of 0.5% by mass or more and 3.0% by mass or less, and even more preferably in the range of 0.5% by mass or more and 2.0% by mass or less.

The amount of tertiary amine compound in the recycled polyurethane elastic fiber recovered and used as a raw material is preferably in the range of 0.002% by mass or more and 5.0% by mass or less. When the amount of tertiary amine compound in the recycled polyurethane elastic fiber is within this range, the tertiary amine compound in the final polyurethane elastic fiber can be easily kept within the desired tertiary amine compound content range described above. The amount of tertiary amine compound in the recycled polyurethane elastic fiber is more preferably 0.002% by mass or more and 3.0% by mass or less, and even more preferably 0.002% by mass or more and 2.0% by mass or less.

More specifically, the tertiary amine compound is a linear polymer compound with a number average molecular weight of 2,000 or more from the reaction of t-butyldiethanolamine and methylene-bis (4-cyclohexylisocyanate), polyethyleneimine, or a high molecular weight compound having a branched structure containing a primary amino group, a secondary amino group, and a tertiary amino group in the molecular skeleton, etc.

In a polyurethane elastic fiber of the present invention, the amount of the decomposition products from the tertiary amine compound is preferably 1.0% by mass or less. When the amount of the decomposition products from the tertiary amine compound is within this range, preferable practical properties for polyurethane elastic fibers can be ensured, especially the wound fiber shape, composite durability, and yellowing resistance. The amount of the decomposition products from the antioxidant is preferably 1.0% by mass or less, and more preferably 0.5% by mass or less.

A polyurethane elastic fiber of the present invention contains a crosslinked structure modifier, in an amount of 0.2% by mass or more and 1.0% by mass or less. When the amount of crosslinked structure modifier is within this range, preferable practical properties for polyurethane elastic fibers can be ensured, especially elongation and strength at break, permanent distortion, and yellowing resistance.

The crosslinked structure modifier is a monoamine and/or a diamine. Specific examples include monoamines such as dimethylamine, diethylamine and cyclohexylamine, and diamines such as ethylenediamine, 1,2-propanediamine, 1,3-propanediamine, hexamethylenediamine, p-phenylenediamine, p-xylylenediamine, m-xylylenediamine, 1,3-cyclohexyldiamine, hexahydrometaphenylenediamine and 2-methylpentamethylenediamine. Mixtures of monoamines and diamines are especially preferred.

Preferred, are low levels of metal soaps, antioxidants, tertiary amine compounds, and their decomposition products that build up when recycled polyurethane elastic fibers are repeatedly recycled. When commonly used tertiary amine compounds with a number average molecular weight in the range of 2,000 to 10,000 and their decomposition products and commonly used antioxidants with a molecular weight of 1,000 or more and their decomposition products are repeatedly recycled, they build up and cause property deterioration, especially deterioration in elongation and strength at break.

In a recycling process in which waste fibers, such as fibers in an industrial product that does not meet standards due to some defect and that has been rejected immediately after manufacturing, are used at high concentrations, the elongation and strength at break typically decline significantly each time the process is repeated. In order to avoid such a deterioration in properties, as mentioned above, a tertiary amine compound with a high molecular weight or a decomposition product thereof, an antioxidant with a high molecular weight, and a polyurethane source with a low decomposition product content are included to effectively reduce the concentration. Preferably, polyurethane is added that has a number average molecular weight of 20,000 or more and 120,000 or less based on gel permeation chromatography (GPC) and that does not have peaks or shoulders in the detected intensity curve for the region with a molecular weight of 30,000 or less based on GPC. When the elongation and strength at break of the polyurethane elastic fiber is taken into consideration, the range of the number average molecular weight is preferably in the range of 30,000 or more and 100,000 or less, and more preferably in the range of 40,000 or more and 80,000 or less. Note that the detected intensity curve refers to the differential molecular weight distribution curve (where the horizontal axis indicates the molecular weight and the vertical axis indicates the value obtained by differentiating the concentration fraction by the logarithmic value of the molecular weight), and the shoulder refers to the shoulder peak.

The molecular weight of a polyurethane elastic fiber using recycled polyurethane elastic fiber as a raw material according to the present invention, as a number average molecular weight, is preferably in the range of 10,000 or more and 50,000 or less when including a tertiary amine compound with a number average molecular weight in the range of 2,000 to 10,000 and/or a commonly used antioxidant having a molecular weight of 1,000 or more. The molecular weight is measured by GPC and converted in terms of polystyrene.

Regarding the two carbonyl expansion and contraction vibrations of urethane bonds based on the infrared spectrum (IR) of recycled polyurethane elastic fibers, polyurethane is preferably included in which the absorbances AvC = O 1730 cm⁻¹ and AvC = O 1710 cm⁻¹ are such that the ratio of AvC = O 1730 cm⁻¹ to AvC = O 1710 cm⁻¹, that is, AvC = O 1730 cm⁻¹/AvC = O 1710 cm⁻¹ is 1.05 or more and 1.50 or less.

A preferred source of recycled polyurethane raw material occurs when the intended use of a garment product has been realized and the garment product has been washed frequently. In many cases, this can be achieved by using used clothing such as underwear that has been collected from municipalities. This is because repeated washing with an anionic surfactant makes it suitable as a raw material for recycled polyurethane elastic fibers.

### [Examples]

(Reference examples 1 to 17, examples 18-21, Comparative Example 1 to 3) The production and evaluation of recycled polyurethane elastic fibers and elastic fibers to which a metal soap has been added will now be described with reference to Examples 1 to 21 and Comparative Examples 1 to 3 shown in Tables 1 to 4.

### < Production of Dry-Spun Polyurethane Elastic Fibers >

In Comparative Example 1, a N,N'-dimethylacetamide (DMAc) solution (35 mass%) of a polyurethane with a molecular weight of 2,000 composed of tetramethylene ether glycol, bis-(p-isocyanatephenyl)-methane and ethylenediamine was polymerized to obtain polymer solution PUU1.

Next, a DMAc solution (35% by mass) of the mixture was prepared using a 1:1 (mass ratio) mixture of polyurethane produced by the reaction of t-butyldiethanolamine and methylene-bis (4-cyclohexylisocyanate) (Metachlor (registered trademark) 2462 from DuPont) and a condensation polymer of p-cresol and divinylbenzene (Metachlor (registered trademark) 2390 from DuPont) as an antioxidant to obtain an additive solution (B).

Solution PUU1, additive solution (B), and ethylenediamine (C) were uniformly mixed together at 99% by mass, 1.0% by mass, and 0.1% by mass, respectively, to prepare a spinning solution (D).

This spinning solution was dry-spun at a dry nitrogen temperature of 300°C or higher with the DMAc and suspended ethylenediamine in the spinning solution constituting no more than 1/100th of the spinning solution content. At this time, the speed ratio between the godet roll and the take-up device was 1:1.20, and 22 dtex/3 fil multifilament polyurethane elastic fibers were spun. A treatment agent (oil agent) described below was supplied by an oiling roller before the fiber was taken up. The fiber was taken up using a surface drive take-up device at a winding speed of 600 m/min and wound on a cylindrical paper tube with a length of 58 mm via a traverse guide that sets a winding width of 38 mm. A dry-spun polyurethane elastic fiber was obtained as 500 g of wound fiber. The polyurethane elastic fiber was a fused yarn in which three filaments were fused. The rotation speed of the oiling roller was adjusted so that a predetermined amount of treatment agent was applied to the fused yarn. The amount of the treatment agent applied was measured in accordance with JIS-L1073 (synthetic fiber filament yarn testing method) using n-hexane as an extraction solvent. The composition of the treatment agent used here was a mixture of 80 parts by mass of polydimethylsiloxane with a viscosity of 1 × 10⁻⁵ m²/s at 25°C, 15 parts by mass of mineral oil with a viscosity of 1.2 × 10⁻⁵ m²/s at 25°C, and 5 parts by mass of magnesium distearate with an average particle size of 0.5 µm.

In Example 1, the fiber obtained in Comparative Example 1 was taken off the paper tube and dissolved in DMAc to prepare a 35% by mass DMAc solution. This is referred to as a DMAc solution of once recycled polyurethane elastic fiber R1. (Here, the number in R1 refers to the number of times the fiber was recycled.) This was used as a spinning solution and spun using the same method as in Comparative Example 1.

In Example 2, the fiber obtained in Example 1 was taken off the paper tube and dissolved in DMAc to prepare a 35% by mass DMAc solution. This is referred to as a DMAc solution of polyurethane elastic fiber R2. This was used as a spinning solution and spun using the same method as in Comparative Example 1.

As shown in Table 1, Examples 3 to 6 were spun after the fibers had been recycled 3 to 9 times.

In Comparative Example 2, spinning was performed in the same manner as in Example 1 except that the treatment agent (oil agent) used here was a mixture of 80 parts by mass of polydimethylsiloxane with a viscosity of 1 × 10⁻⁵ m²/s at 25°C, 20 parts by mass of mineral oil with a viscosity of 1.2 × 10⁻⁵ m²/s at 25°C, and 0 parts by mass of magnesium distearate.

In Tables 1 to 4, the content values refer to values per 100 parts by mass of the solid polymer content of the spinning solution. In Table 3 and Table 4, recycled polyurethane elastic fiber RA for previous times recycled refers to the recycled polyurethane elastic fiber as a raw material taken from frequently washed used underwear that has a number average molecular weight of 63,000 based on GPC, that does not have peaks or shoulders in the detected intensity curve for the region with a molecular weight of 30,000 or less based on GPC, and that has a AvC = O 1730 cm⁻¹/AvC = O 1710cm⁻¹ based on IR of 1.35.

The resulting dry-spun polyurethane elastic fibers (sample fibers below) were subjected to the following evaluations.

### < Wound Fiber Shape >

First, 500 g of fiber was wound around a paper tube with a width of 57.5 mm, an inner diameter of 73.5 mm, and a wall thickness of 6.1 mm at a winding speed (circumferential speed of the wound fiber) of 500 m/min, and a contact pressure of 10 kg. The amount of oil applied was 5.0%. With the wound fiber is viewed in the width direction, the dimensions on both sides where the wound fiber was not present were measured at ten points with respect to the paper tube width of 57.5 mm, and the average value was used as d. Here, d is preferably 0.5 mm or more and 6 mm or less, more preferably 1.5 mm or more and 5 mm or less. The value for d is important from the standpoint of keeping packaged cake from coming into contact with the packaging material and rubbing against it, causing damage such as fiber breakage or cake deformation, and making it difficult to stably produce a large number of rolls.
⊙: d = 1.5 mm or more and 5 mm or less
○: d = 1.0 mm or more and less than 1.5 mm
Δ: d = 0.5 mm or more and less than 1.0 mm
x: d = less than 0.5 mm

### < Unwinding Tension >

The unwinding tension was measured using the device shown in Fig. 1. The wound fiber 1 consisting of the sample fiber wound around a cylindrical paper tube 2 was fixed as shown in Fig. 1, and the sample fiber 3 was unwound from one side of the wound fiber 1 at a constant speed of 45.7 m/min. The unwound sample fiber 3 was passed through a guide 4 and a ceramic slot guide 5, and drawn along a trajectory bent by 90 degrees by a tension gauge roller 6. The roller 12 was driven at 45.7 m/min, the trajectory was bent by 90 degrees, and the fiber was suctioned using a suction gun 13. A free tension gauge roller 6 was connected to an electrical strain gauge 7, the electrical signals were averaged by an integrator 9 via a conductive wire 8 and data was stored in a recorder 11 via a conductive wire 10. This test was performed for four minutes, and the average unwinding tension per fiber length of 183 m was measured.

The measurement was conducted at a temperature of 25°C and a humidity of 60% RH. The positions on the wound fiber at which measurements were made were the surface layer, the central layer, and the innermost layer of the wound fiber. Specifically, the surface layer of the wound fiber was the layer from which about 5 g of fiber was removed from the surface of the wound fiber. About 5 g of yarn was removed from the surface of the wound fiber because the winding pattern on the surface of the wound fiber is sometimes intentionally changed in this layer. The innermost layer is a layer in which about 5 g of wound yarn is left in the wound fiber, and the central layer is an intermediate layer between the surface layer and the innermost layer of the wound fiber. The wound fiber used to measure the unwinding tension was first stored for three months or more at about 20°C. The unwinding tension was evaluated according to the following criteria.
⊙: Less than 0.15 cN
○: 0.15 cN or more and less than 0.25 cN
Δ: 0.25 cN or more and less than 0.50 cN
x: 0.50 cN or more

### < Elongation at Break, Strength at Break, Permanent Strain Rate, Stress Relaxation Rate >

The elongation at break, strength at break, permanent strain rate, and stress relaxation rate of the polyurethane elastic fiber was measured in a tensile test using an Instron 5564 tensile tester. A sample with a test length of 5 cm (L1) was stretched five times by 300% at a tensile rate of 50 cm/min. At this time, the stress at the time of 300% elongation was defined as (G1). The length of the same was then held at 300% elongation for 30 seconds. The stress after holding for 30 seconds was defined as (G2). Next, the length of the sample the elongation of the sample was released and the stress reached 0 was defined as (L2). The stretching by 300%, holding, and recovery operations were repeated, and the sample was cut after being stretched for a sixth time. The stress at break was defined as (G3), and the sample length at break was defined as (L3). These properties were calculated using the following equations. $Strength at Break \left(cN\right) = \left(G3\right)$
⊙: more than 20; ○: 17 to 20; Δ: 14 to 17; x: less than 14 $Strength at Break \left(%\right) = 100 \times \left(\left(L3\right)-\left(L1\right)\right) / \left(L1\right)$
⊙: more than 480; ○: 460 to 480; Δ: 430 to 460; x: less than 430 $Permanent Strain Rate \left(%\right) = 100 \times \left(\left(L2\right)-\left(L1\right)\right) / \left(L1\right)$
⊙: less than 20; ○: 20 to 22; Δ: 22 to 24; x: more than 24 $Stress Relaxation Rate \left(%\right) = 100 \times \left(\left(G1\right)-\left(G2\right)\right) / \left(G1\right)$
⊙: less than 25; ○: 25 to 28; Δ: 28 to 31; x: more than 31

### < Composite Durability, Light Fastness, Yellowing >

For composite durability, the sample fiber was stretched by 100%, and the breaking strength retention rate was determined after exposure treatments (A), (B), and (C) below. For light fastness, the sample fiber was stretched by 100%, and the breaking strength retention rate was determined after exposure treatment (A) below. For yellowing, the sample fiber was wound tightly around a 5 x 5 cm sample plate under a minimum load so that the impact of color on the sample plate did not appear to complete the sample. The front surface of the sample and a standard white surface (JIS Z8722 4.3.4) were uniformly flattened and covered with a transparent glass plate with a thickness of about 1 mm. The b value was measured according to method C in JIS L1013 (Hunter's method) using a Huntertype color difference meter and calculated based on the following equation. Five measurements were made, and the average value was used. $b = 7.0 \left(Y-0.847Z\right) / {Y}^{1 / 2}$ (Here, X, Y, Z were calculated according to JIS Z8701.)

The yellowing was evaluated based on the degree of yellowing of the sample after exposure treatments (A) and (B). During each exposure treatment, the degree of yellowing (Δb) was calculated as follows.$Δ b = b value after exposure treatment - b value before exposure treatment$

The exposure treatments were carried out as follows.

### (A) Ultraviolet (UV) Exposure Treatment

Using a carbon arc weather meter from Suga Test Instruments, the sample was exposed for 25 hours at a temperature and humidity of 63°C and 60% RH.

### (B) Nitrogen Oxide (NOₓ) Exposure Treatment

Using a sealed container (Scott Tester) with a rotating sample stand, the sample was exposed for 20 hours to 10 ppm of NO₂ gas at a temperature and humidity of 40°C and 60% RH.

### (C) Chlorine Bleach (Cl₂) Exposure Treatment

The sample was exposed to a 500 ppm aqueous solution of Kao Haiter from Kao Corporation in a constant temperature bath at 40°C for 30 minutes, and then washed with water for 10 minutes. These operations were repeated eight times.

The evaluation criteria were as follows.

| | ⊙ | ○ | Δ | X |
|---|---|---|---|---|
| Composite Durability | ≥ 60% | 40-60% | 20-40% | ≤ 20% |
| Light Fastness | ≥ 80% | 60-80% | 40-60% | ≤ 40% |
| Yellowing | < 3 | 3~6 | 6-10 | ≥ 10 |

The GPC molecular weight measurements were performed under the following conditions.

Fig. 2 is a graph showing GPC measurements of Example 21.
Columns: Two SHODEX KF-806M columns from Showa Denko
Solvent: N,N-dimethylacetamide 1 ml/min
Temperature: 40°C
Detector: Differential refractometer (RI detector)

The IR spectrum was measured with the KBr tablet method using an FT/IR7300 infrared spectroscope from JASCO Corporation. Fig. 3 is a graph showing IR spectrum measurements of Example 21.

### < Quantitative Analysis of the Magnesium Stearate Metal Soap >

Using the fiber as a sample, the Mg concentration was quantified using inductively coupled plasma atomic emission spectroscopy (ICP-AES), and the Mg concentration was multiplied by the molecular weight ratio of magnesium stearate to Mg (24.33).

**[Table 1A]**

| | Virgin Polymer | Recycled Polyurethane Elastic Fiber in Previous Cycle | Recycled Polyurethane Elastic Fiber Content in Previous Cycle | No. of Times Recycled | Metal Soap Content (Metal Soap Content of Coated Oil + Internal Buildup Rate) | Surfactant Content (Amount of Buildup) | Antioxidant Content |
|---|---|---|---|---|---|---|---|
| | | | (mass%) | (times) | (mass%) | (mass%) | (mass%) |
| C. Ex. 1 | PUU1 | - | 0 | 0 | 0.25 | 0 | 0.5 |
| Ex. 1 | - | R1 | 100 | 1 | 0.5 | 0 | 0.5 |
| Ex. 2 | - | R2 | 100 | 2 | 0.75 | 0 | 0.5 |
| Ex. 3 | - | R3 | 100 | 3 | 1 | 0 | 0.5 |
| Ex. 4 | - | R6 | 100 | 6 | 1.75 | 0 | 0.5 |
| Ex. 5 | - | R7 | 100 | 7 | 2 | 0 | 0.5 |
| Ex. 6 | - | R9 | 100 | 9 | 2.5 | 0 | 0.5 |
| C. Ex. 2 | - | R1 | 100 | 1 | < 0.001 (100% Recycling of Oil-Free Yarn), MgSt-Free Oil Applied | 0 | 0.5 |

**[Table 1B]**

| | Tertiary Amine Compound Content | Amount of Crosslinked Structure Modifier | Number Average Molecular Weight | Metal Soap Content in Recycled Polyurethane Elastic Fiber | Number Average Molecular Weight of Recycled Polyurethane Elastic Fiber | Peak or Shoulder in Detected Strength Curve of Recycled Polyurethane Elastic Fiber | AvC = O 1730⁻¹/ AvC = O 1710⁻¹ of Recycled Polyurethane Elastic Fiber | Use of Recycled Polyurethane Elastic Fiber (Application) |
|---|---|---|---|---|---|---|---|---|
| | (mass%) | (mass%) | | (mass%) | | | | |
| C. Ex.1 | 0.5 | 0.1 | 44000 | - | - | - | - | Not used |
| Ex. 1 | 0.5 | 0.1 | 42000 | 0.25 | 44000 | Yes | 1.05 | Not used |
| Ex. 2 | 0.5 | 0.1 | 37000 | 0.5 | 42000 | Yes | 1.05 | Not used |
| Ex.3 | 0.5 | 0.1 | 36000 | 0.75 | 37000 | Yes | 1.05 | Not used |
| Ex. 4 | 0.5 | 0.1 | 13000 | 1.5 | 13000 | Yes | 1.05 | Not used |
| Ex. 5 | 0.5 | 0.1 | 13000 | 1.75 | 13000 | Yes | 1.05 | Not used |
| Ex. 6 | 0.5 | 0.1 | 11000 | 2.25 | 12000 | Yes | 1.05 | Not used |
| C. Ex. 2 | 0.5 | 0.1 | 42000 | - | 44000 | - | - | Not used |

**[Table 1C]**

| | Wound Fiber Shape | Unwinding Tension | Elongation at Break | Breaking Strength | Permanent Distortion | Stress Relaxation | Overall Durability |
|---|---|---|---|---|---|---|---|
| C. Ex. 1 | ⊚ | ⊚ | ⊚ | ⊚ | ⊚ | ⊚ | ⊚ |
| Ex. 1 | ⊚ | ○ | ○ | ○ | ○ | ○ | △ |
| Ex. 2 | ○ | ○ | ○ | ○ | ○ | ○ | Δ |
| Ex. 3 | ○ | ○ | ○ | ○ | ○ | ○ | Δ |
| Ex. 4 | Δ | Δ | Δ | Δ | Δ | ○ | Δ |
| Ex. 5 | Δ | Δ | Δ | Δ | Δ | Δ | Δ |
| Ex. 6 | Δ | ⊚ | Δ | Δ | Δ | Δ | Δ |
| C. Ex. 2 | Δ | × | ○ | ○ | ○ | ○ | ○ |

**[Table 1D]**

| | Light Fastness | Yellowing | Comprehensive Evaluation |
|---|---|---|---|
| C. Ex. 1 | ⊚ | ⊚ | ⊚ |
| Ex. 1 | ○ | Δ | Δ |
| Ex. 2 | ○ | Δ | Δ |
| Ex. 3 | Δ | Δ | Δ |
| Ex. 4 | Δ | Δ | Δ |
| Ex. 5 | Δ | Δ | Δ |
| Ex. 6 | Δ | Δ | Δ |
| C. Ex. 2 | ○ | Δ | × |

**[Table 2A]**

| | Virgin Polymer | Recycled Polyurethane Elastic Fiber in Previous Cycle | Recycled Polyurethane Elastic Fiber Content in Previous Cycle | No. of Times Recycled | Metal Soap Content (Metal Soap Content of Coated Oil + Internal Buildup Rate) | Surfactant Content (Amount of Buildup) | Antioxidant Content | Tertiary Amine Compound Content |
|---|---|---|---|---|---|---|---|---|
| | | | (mass%) | (times) | (mass%) | (mass%) | (mass%) | (mass%) |
| Ex. 6 | - | R9 | 100 | 9 | 2.5 | 0 | 0.5 | 0.5 |
| Ex. 7 | - | R9 | 100 | 9 | 2.5 | 0.2 | 0.5 | 0.5 |
| Ex. 8 | - | R9 | 100 | 9 | 2.5 | 0.4 | 0.5 | 0.5 |
| Ex. 9 | - | R9 | 100 | 9 | 2.5 | 0.8 | 0.5 | 0.5 |
| Ex. 10 | - | R9 | 100 | 9 | 2.5 | 1.6 | 0.5 | 0.5 |
| Ex. 11 | - | R9 | 100 | 9 | 2.5 | 2.5 | 0.5 | 0.5 |
| C. Ex. 3 | | R9 | 100 | 9 | 2.5 | 3.6 | 0.5 | 0.5 |

**[Table 2B]**

| | Amount of Crosslinked Structure Modifier | Number Average Molecular Weight | Metal Soap Content in Recycled Polyurethane Elastic Fiber | Number Average Molecular Weight of Recycled Polyurethane Elastic Fiber | Peak or Shoulder in Detected Strength Curve of Recycled Polyurethane Elastic Fiber | AvC = O 1730⁻¹/ AvC = O 1710⁻¹ of Recycled Polyurethane Elastic Fiber | Use of Recycled Polyurethane Elastic Fiber (Application) |
|---|---|---|---|---|---|---|---|
| | (mass%) | | (mass%) | | | | |
| Ex. 6 | 0.1 | 11000 | 2.25 | 12000 | Yes | 1.05 | Not used |
| Ex. 7 | 0.1 | 11000 | 2.25 | 12000 | Yes | 1.05 | Not used |
| Ex. 8 | 0.1 | 11000 | 2.25 | 12000 | Yes | 1.05 | Not used |
| Ex. 9 | 0.1 | 11000 | 2.25 | 12000 | Yes | 1.05 | Not used |
| Ex. 10 | 0.1 | 11000 | 2.25 | 12000 | Yes | 1.05 | Not used |
| Ex. 11 | 0.1 | 11000 | 2.25 | 12000 | Yes | 1.05 | Not used |
| C. Ex. 3 | 0.1 | 11000 | 2.25 | 12000 | Yes | 1.05 | Not used |

**[Table 2C]**

| | Wound Fiber Shape | Unwinding Tension | Elongation at Break | Breaking Strength | Permanent Distortion | Stress Relaxation | Overall Durability | Light Fastness |
|---|---|---|---|---|---|---|---|---|
| Ex. 6 | Δ | ⊚ | Δ | Δ | Δ | Δ | Δ | Δ |
| Ex. 7 | ○ | ○ | ○ | Δ | Δ | Δ | Δ | Δ |
| Ex. 8 | ○ | ○ | ○ | Δ | Δ | Δ | Δ | Δ |
| Ex. 9 | ○ | ○ | ○ | ○ | ○ | ○ | Δ | Δ |
| Ex. 10 | ○ | ○ | ○ | ○ | ○ | ○ | Δ | Δ |
| Ex. 11 | ○ | ○ | ○ | ○ | ○ | ○ | Δ | Δ |
| C. Ex. 3 | ○ | △ | ○ | Δ | × | ○ | ○ | ○ |

**[Table 2D]**

| | Yellowing | Comprehensive Evaluation |
|---|---|---|
| Ex. 6 | Δ | Δ |
| Ex. 7 | Δ | Δ |
| Ex. 8 | Δ | Δ |
| Ex. 9 | Δ | ○ |
| Ex. 10 | Δ | ○ |
| Ex. 11 | Δ | ○ |
| C. Ex. 3 | Δ | × |

**[Table 3A]**

| | Virgin Polymer | Recycled Polyurethane Elastic Fiber in Previous Cycle | Recycled Polyurethane Elastic Fiber Content in Previous Cycle | No. of Times Recycled | Metal Soap Content (Metal Soap Content of Coated Oil + Internal Buildup Rate) | Surfactant Content (Amount of Buildup) | Antioxidant Content |
|---|---|---|---|---|---|---|---|
| | | | (mass%) | (times) | (mass%) | (mass%) | (mass%) |
| Ex. 8 | - | R9 | 100 | 9 | 2.5 | 0.4 | 0.5 |
| Ex. 12 | PUU1 | RA | 50 | 9 | 2.5 | 0.4 | 0.25 |
| Ex. 13 | PUU1 | RA | 50 | 10 | 2.5 | 0.4 | 0.125 |

**[Table 3B]**

| | Tertiary Amine Compound Content | Amount of Crosslinked Structure Modifier | Number Average Molecular Weight | Metal Soap Content in Recycled Polyurethane Elastic Fiber | Number Average Molecular Weight of Recycled Polyurethane Elastic Fiber | Peak or Shoulder in Detected Strength Curve of Recycled Polyurethane Elastic Fiber | AvC = O 1730⁻¹/ AvC = O 1710⁻¹ of Recycled Polyurethane Elastic Fiber | Use of Recycled Polyurethane Elastic Fiber (Application) |
|---|---|---|---|---|---|---|---|---|
| | (mass%) | (mass%) | | (mass%) | | | | |
| Ex. 8 | 0.5 | 0.1 | 11000 | 2.25 | 12000 | Yes | 1.05 | Not used |
| Ex. 12 | 0.25 | 0.05 | 33000 | 1.375 | 63000 | No | 1.35 | Frequently washed undergarment |
| Ex.13 | 0.125 | 0.025 | 40000 | 0.9375 | 63000 | No | 1.35 | Frequently washed undergarment |

**[Table 3C]**

| | Wound Fiber Shape | Unwinding Tension | Elongation at Break | Breaking Strength | Permanent Distortion | Stress Relaxation | Overall Durability |
|---|---|---|---|---|---|---|---|
| Ex. 8 | ○ | ○ | ○ | Δ | Δ | Δ | Δ |
| Ex. 12 | ○ | ○ | ○ | Δ | ○ | ○ | Δ |
| Ex. 13 | ○ | ○ | ○ | ○ | ○ | ○ | Δ |

**[Table 3D]**

| | Light Fastness | Yellowing | Comprehensive Evaluation |
|---|---|---|---|
| Ex. 8 | Δ | Δ | Δ |
| Ex. 12 | Δ | Δ | ○ |
| Ex. 13 | Δ | Δ | ○ |

**[Table 4A]**

| | Virgin Polymer | Recycled Polyurethane Elastic Fiber in Previous Cycle | Recycled Polyurethane Elastic Fiber Content in Previous Cycle | No. of Times Recycled | Metal Soap Content (Metal Soap Content of Coated Oil + Internal Buildup Rate) | Surfactant Content (Amount of Buildup) | Antioxidant Content |
|---|---|---|---|---|---|---|---|
| | | | (mass%) | (times) | (mass%) | (mass%) | (mass%) |
| Ex. 12 | - | RA | 50 | 9 | 2.5 | 0.4 | 0.25 |
| Ex. 14 | PUU1 | RA | 50 | 10 | 2.5 | 0.9 | 1 |
| Ex. 15 | PUU1 | RA | 50 | 10 | 2.5 | 0.9 | 2 |
| Ex. 16 | PUU1 | RA | 50 | 10 | 2.5 | 0.9 | 1 |
| Ex. 17 | PUU1 | RA | 50 | 10 | 2.5 | 0.9 | 2 |
| Ex. 18 | PUU1 | RA | 50 | 10 | 2.5 | 0.9 | 1 |
| Ex. 19 | PUU1 | RA | 50 | 10 | 2.5 | 0.9 | 2 |
| Ex. 20 | PUU1 | RA | 50 | 10 | 2.5 | 0 | 3 |
| Ex. 21 | PUU1 | RA | 50 | 10 | 2.5 | 1.8 | 3 |
| C. Ex. 1 | PUU1 | - | 0 | 0 | 0.25 | 0 | 0.5 |

**[Table 4B]**

| | Tertiary Amine Compound Content | Amount of Crosslinked Structure Modifier | Number Average Molecular Weight | Metal Soap Content in Recycled Polyurethane Elastic Fiber | Number Average Molecular Weight of Recycled Polyurethane Elastic Fiber | Peak or Shoulder in Detected Strength Curve of Recycled Polyurethane Elastic Fiber | AvC = O 1730⁻¹/ AvC = O 1710⁻¹ of Recycled Polyurethane Elastic Fiber | Application for Recycled Polyurethane Elastic Fiber |
|---|---|---|---|---|---|---|---|---|
| | (mass%) | (mass%) | | (mass%) | | | | |
| EX.12 | 0.25 | 0.05 | 33000 | 1.375 | 63000 | None | 1.35 | Frequently washed undergarment |
| EX.14 | 0.125 | 0.025 | 33000 | 0.9375 | 63000 | None | 1.35 | Freq uently washed undergarment |
| EX.15 | 0.125 | 0.025 | 32000 | 0.9375 | 63000 | None | 1.35 | Freq uently washed undergarment |
| EX.16 | 1 | 0.025 | 32000 | 0.9375 | 63000 | None | 1.35 | Freq uently washed undergarment |
| EX.17 | 3 | 0.025 | 23000 | 0.9375 | 63000 | None | 1.35 | Freq uently washed undergarment |
| EX.18 | 1 | 0.2 | 32000 | 0.9375 | 63000 | None | 1.35 | Freq uently washed undergarment |
| EX.19 | 3 | 0.5 | 23000 | 0.9375 | 63000 | None | 1.35 | Freq uently washed undergarment |
| EX.20 | 3 | 0.5 | 21000 | 0.9375 | 63000 | None | 1.35 | Freq uently washed undergarment |
| EX.21 | 3 | 0.5 | 21000 | 0.9375 | 63000 | None | 1.35 | Freq uently washed undergarment |
| C. Ex. 1 | 0.5 | 0.1 | 44000 | - | - | - | - | Not used |

**[Table 4C]**

| | Wound Fiber Shape | Unwinding Tension | Elongation at Break | Breaking Strength | Permanent Distortion | Stress Relaxation | Overall Durability |
|---|---|---|---|---|---|---|---|
| Ex. 12 | ○ | ○ | ○ | Δ | ○ | ○ | Δ |
| Ex. 14 | ○ | ○ | ○ | ○ | ○ | ○ | ○ |
| Ex. 15 | ○ | ○ | ○ | ○ | ○ | ○ | ⊚ |
| Ex. 16 | ○ | ○ | ○ | ○ | ○ | ○ | ○ |
| Ex. 17 | ○ | ○ | ○ | ○ | Δ | ○ | ○ |
| Ex. 18 | ○ | ○ | ○ | ○ | ○ | ○ | ⊚ |
| Ex. 19 | ○ | ○ | ○ | ⊚ | ○ | ○ | ⊚ |
| Ex. 20 | ○ | ○ | Δ | ⊚ | ○ | ○ | ⊚ |
| Ex. 21 | ⊚ | ⊚ | ⊚ | ⊚ | ⊚ | ⊚ | ⊚ |
| C. Ex. 1 | ⊚ | ⊚ | ⊚ | ⊚ | ⊚ | ⊚ | ⊚ |

**[Table 4D]**

| | Light Fastness | Yellowing | Comprehensive Evaluation |
|---|---|---|---|
| EX. 12 | Δ | Δ | ○ |
| EX. 14 | Δ | Δ | Δ |
| EX. 15 | Δ | Δ | Δ |
| EX. 16 | Δ | ○ | Δ |
| EX. 17 | ○ | Δ | Δ |
| EX. 18 | ○ | ○ | ○ |
| EX. 19 | ○ | ○ | ○ |
| EX. 20 | ○ | ○ | ○ |
| EX. 21 | ⊚ | ⊚ | ⊚ |
| C. Ex. 1 | ⊚ | ⊚ | ⊚ |

### [Reference Signs List]

1: Wound fibers
2: Cylindrical paper tube
3: Unwound traveling elastic fiber (sample fiber)
4: Guide
5: Ceramic slot guide
6: Tension gauge roller
7: Electric strain gauge
8: Conductive wire
9: Integrator
10: Conductive wire
11: Recorder
12: Roller
13: Suction gun

## Claims

1. A polyurethane elastic fiber containing a recycled polyurethane elastic fiber as at least one raw material, wherein the amount of metal soap in the polyurethane elastic fiber is 0.003% by mass or more and 3.0% by mass or less, wherein the polyurethane elastic fiber contains 0.2% by mass or more and 1.0% by mass or less of a crosslinked structure modifier, wherein the crosslinked structure modifier is a monoamine and/or diamine, and wherein the polyurethane elastic fiber contains 0.003% by mass or more and 3.0% by mass or less of a surfactant.

2. A polyurethane elastic fiber according to claim 1, wherein the polyurethane elastic fiber contains 0.002% by mass or more and 5.0% by mass or less of an antioxidant.

3. A polyurethane elastic fiber according to claim 1 or 2, wherein the polyurethane elastic fiber contains 0.2% by mass or more and 5.0% by mass or less of a tertiary amine compound.

4. A polyurethane elastic fiber according to any of claims 1 to 3, wherein the crosslinked structure modifier is selected from the group consisting of dimethylamine, diethylamine, cyclohexylamine, ethylenediamine, 1,2-propanediamine, 1,3-propanediamine, hexamethylenediamine, p-phenylenediamine, p-xylylenediamine, m-xylylenediamine, 1,3-cyclohexyldiamine, hexahydrometaphenylenediamine and 2-methylpentamethylenediamine.

5. A polyurethane elastic fiber according to any of claims 1 to 4, wherein the polyurethane elastic fiber contains 0.02% by mass or more and 1.0% by mass or less of a metal soap.

6. A polyurethane elastic fiber according to any of claims 1 to 5, wherein the number average molecular weight of the recycled polyurethane elastic fiber based on gel permeation chromatography (GPC) is 20,000 or more and 120,000 or less, and there are no peaks or shoulders in the detected intensity curve for regions with a molecular weight of 30,000 or less based on GPC.

## Patentansprüche

1. Elastische Polyurethanfaser, enthaltend eine rezyklierte elastische Polyurethanfaser als mindestens einen Rohstoff, wobei die Menge an Metallseife in der elastischen Polyurethanfaser 0,003 Massen-% oder mehr und 3,0 Massen-% oder weniger beträgt, wobei die elastische Polyurethanfaser 0,2 Massen-% oder mehr und 1,0 Massen-% oder weniger eines Modifikators der vernetzten Struktur enthält, wobei es sich bei dem Modifikators der vernetzten Struktur um ein Monoamin und/oder Diamin handelt, und wobei die elastische Polyurethanfaser 0,003 Massen-% oder mehr und 3,0 Massen-% oder weniger eines Tensids enthält.

2. Elastische Polyurethanfaser nach Anspruch 1, wobei die elastische Polyurethanfaser 0,002 Massen-% oder mehr und 5,0 Massen-% oder weniger eines Antioxidans enthält.

3. Elastische Polyurethanfaser nach Anspruch 1 oder 2, wobei die elastische Polyurethanfaser 0,2 Massen-% oder mehr und 5,0 Massen-% oder weniger einer tertiären Aminverbindung enthält.

4. Elastische Polyurethanfaser nach einem der Ansprüche 1 bis 3, wobei der Modifikators der vernetzten Struktur aus der Gruppe bestehend aus Dimethylamin, Diethylamin, Cyclohexylamin, Ethylendiamin, 1,2-Propandiamin, 1,3-Propandiamin, Hexamethylendiamin, p-Phenylendiamin, p-Xylylendiamin, m-Xylylendiamin, 1,3-Cyclohexyldiamin, Hexahydrometaphenylendiamin und 2-Methylpentamethylendiamin ausgewählt ist.

5. Elastische Polyurethanfaser nach einem der Ansprüche 1 bis 4, wobei die elastische Polyurethanfaser 0,02 Massen-% oder mehr und 1,0 Massen-% oder weniger einer Metallseife enthält.

6. Elastische Polyurethanfaser nach einem der Ansprüche 1 bis 5, wobei das zahlenmittlere Molekulargewicht der rezyklierten elastischen Polyurethanfaser auf Basis von Gelpermeationschromatographie (GPC) 20.000 oder mehr und 120.000 oder weniger beträgt und es keine Peaks oder Schultern in der detektierten Intensitätskurve für Regionen mit einem Molekulargewicht von 30.000 oder weniger auf Basis von GPC gibt.

## Revendications

1. Fibre élastique en polyuréthane contenant une fibre élastique en polyuréthane recyclé en tant qu'au moins une matière première, dans laquelle la quantité de savon métallique dans la fibre élastique en polyuréthane est de 0,003 % en masse ou plus et de 3,0 % en masse ou moins, dans laquelle la fibre élastique en polyuréthane contient 0,2 % en masse ou plus et 1,0 % en masse ou moins d'un modificateur de structure réticulé, dans laquelle le modificateur de structure réticulé est une monoamine et/ou diamine, et dans laquelle la fibre élastique en polyuréthane contient 0,003 % en masse ou plus et 3,0 % en masse ou moins d'un tensioactif.

2. Fibre élastique en polyuréthane selon la revendication 1, dans laquelle la fibre élastique en polyuréthane contient 0,002 % en masse ou plus et 5,0 % en masse ou moins d'un antioxydant.

3. Fibre élastique en polyuréthane selon la revendication 1 ou 2, dans laquelle la fibre élastique en polyuréthane contient 0,2 % en masse ou plus et 5,0 % en masse ou moins d'un composé amine tertiaire.

4. Fibre élastique en polyuréthane selon l'une quelconque des revendications 1 à 3, dans laquelle le modificateur de structure réticulé est choisi dans le groupe constitué par la diméthylamine, la diéthylamine, la cyclohexylamine, l'éthylènediamine, la 1,2-propanediamine, la 1,3-propanediamine, l'hexaméthylènediamine, la p-phénylènediamine, la p-xylylènediamine, la m-xylylènediamine, la 1,3-cyclohexyldiamine, l'hexahydrométaphénylènediamine et la 2-méthylpentaméthylènediamine.

5. Fibre élastique en polyuréthane selon l'une quelconque des revendications 1 à 4, dans laquelle la fibre élastique en polyuréthane contient 0,02 % en masse ou plus et 1,0 % en masse ou moins d'un savon métallique.

6. Fibre élastique en polyuréthane selon l'une quelconque des revendications 1 à 5, dans laquelle le poids moléculaire moyen en nombre de la fibre élastique en polyuréthane recyclé basé sur une chromatographie par perméation de gel (GPC) est de 20 000 ou plus et de 120 000 ou moins, et il n'y a pas de pics ou d'épaulements dans la courbe d'intensité détectée pour des zones ayant un poids moléculaire de 30 000 ou moins basé sur GPC.
